# EUROPEAN PATENT SPECIFICATION

(11) **EP 3 757 867 B1**
(45) Date of publication and mention of the grant of the patent: **02.12.2026**
(21) Application number: 19182110.7
(22) Date of filing: 24.06.2019
(51) Int. Cl.: G06V 10/764, G06V 10/80, G06V 10/82, G06F 18/24, G06F 18/25, G06V 20/58

(54) **METHOD AND SYSTEM FOR DETERMINING WHETHER INPUT DATA TO BE CLASSIFIED IS MANIPULATED INPUT DATA**
VERFAHREN UND SYSTEM ZUR BESTIMMUNG, OB ZU KLASSIFIZIERENDE EINGANGSDATEN MANIPULIERTE EINGANGSDATEN SIND
PROCÉDÉ ET SYSTÈME POUR DÉTERMINER SI DES DONNÉES SAISIES À CLASSER SONT DES DONNÉES SAISIES MANIPULÉES

(43) Date of publication of application: 30.12.2020
(73) Proprietor: Aptiv Technologies AG, 8200 Schaffhausen (CH)
(72) Inventor: CENNAMO, Alessandro, 42275 Wuppertal (DE); FRIEDRICHS, Klaus, 44229 Dortmund (DE); ROESE-KOERNER, Lutz, 42899 Remscheid (DE); FREEMAN, Ido, 40233 Düsseldorf (DE); SACHDEVA, Akash, 42117 Wuppertal (DE); ARNOLD, Michael, 40210 Düsseldorf (DE)
(74) Representative: Manitz Finsterwald Patent- und Rechtsanwaltspartnerschaft mbB

(56) References cited:
- ROHAN REDDY MEKALA ET AL: "Metamorphic Detection of Adversarial Examples in Deep Learning Models with Affine Transformations", 2019 IEEE/ACM 4TH INTERNATIONAL WORKSHOP ON METAMORPHIC TESTING (MET), 1 May 2019 (2019-05-01), pages 55 - 62, XP055645659, ISBN: 978-1-7281-2235-9, DOI: 10.1109/MET.2019.00016
- SHIXIN TIAN ET AL: "Detecting Adversarial Examples through Image Transformation", AAAI CONFERENCE ON ARTIFICIAL INTELLIGENCE (AAAI), 2018, 2 February 2018 (2018-02-02), pages 4139 - 4146, XP055645665

## Description

### FIELD

The present disclosure relates to methods for determining whether input data to be classified is manipulated input data. Manipulated data may be data this is based on authentic input data, and has been changed to lead to a wrong classification result.

### BACKGROUND

Digital imaging devices, such as digital cameras, are used in automotive applications to capture images of the environment of a car. Classifying the images is used to gain useful information from the captured images, for example in TSR (traffic sign recognition) systems.

However, input data may be purposely manipulated to lead to wrong classification results during operation, training or showcasing of classification methods.

This is particularly undesirable when the manipulated input data appear to be classified clearly wrong when compared to similar input data, and when a human observer may easily determine that the classification result is wrong.

Accordingly, there is a need for reliably determining whether input data leads to correct classification results, or whether the input data is manipulated data that leads to a wrong classification result.

Mekala et al., "Metamorphic Detection of Adversarial Examples in Deep Learning Models with Affine Transformations", 2019 IEEE/ACM 4th International Workshop on Metamorphic Testing, ISBN 978-1-7281-2235-9, pages 55 - 62, discloses an approach that uses metamorphic testing principles to detect adversarial attacks.

Tian et al.. ET AL, "Detecting Adversarial Examples through Image Transformation", Conference on Artificial Intelligence, 2018, pages 4139 - 4146, discloses a method for detecting adversarial examples using image transformation.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for determining whether input data to be classified into one of a plurality of classes is manipulated input data, the method comprising the following steps performed (in other words: carried out) by computer hardware components: providing class-specific reference data for each class based on at least one distortion; applying the at least one distortion to the input data to obtain at least one distorted input data set; classifying the input data to obtain a reference class; classifying the at least one distorted input data set to obtain at least one distorted classification result; and determining whether the input data is manipulated input data based on the class-specific reference data for the reference class and based on the at least one distorted classification result.

It has been found that using a class specific reference when determining the difference between classification results for input data and classification results of disturbed input data increases robustness of the method. Using the class-specific reference which is based on the same distortions that are used for determining distorted input data sets for the comparison may further increase robustness.

According to another aspect, the class-specific reference data for each class are determined based on: determining a plurality of training data sets, each training data set associated with a respective class. In this aspect, the method comprises for each of the classes and for each of the training data sets associated with the respective class: applying the at least one distortion to the respective training data set to obtain at least one distorted training data set; and classifying the at least one distorted training data set to obtain at least one distorted training classification result for the respective training data set. In this aspect, the method further comprises: determining the reference data for the respective class based on the respective at least one distorted training classification result for each of the training data sets associated with the respective class.

Determining the class-specific reference vectors in the same manner as the distorted input data (i.e. applying the same distortions) and using the training data for which the undistorted training data lies in the respective class for determining the class-specific reference data for determination of the reference data for that class has been found to increase the robustness of the determination method.

According to another aspect, the at least one distortion comprises a plurality of distortions; and determining the class-specific reference data for each class comprises, for each of the classes, for each of the training data sets associated with the respective class: applying the plurality of distortions to the respective training data set to obtain a plurality of distorted training data sets; classifying the plurality of distorted training data sets to obtain a plurality of distorted training classification results; and determining the reference data for the respective class based on a concatenation of the plurality of distorted training classification results.

It will be understood that any kind of storing the aggregation of various data in a structured data set may be referred to as concatenation. For example, a concatenation of several vectors may results in a longer vector, wherein the length of the longer vector is the sum of lengths of the to-be-concatenated vectors.

According to another aspect, the computer implemented method further comprises: applying the plurality of distortions to the input data to obtain a plurality of distorted input data sets; classifying the plurality of distorted input data sets to obtain a plurality of distorted classification results; concatenating the plurality of distorted classification results to obtain a concatenated distorted classification result; and determining whether the input data is manipulated input data based on the class-specific reference data for the reference class and based on the concatenated distorted classification result.

Concatenating the plurality of distorted training classification results, and using class-specific reference data that also is based on a concatenation of the application of the same distortions, increases effectiveness of the method for determining whether the input data is manipulated input data, since data from all of the distortions is considered (in contrast to methods where for example only a maximum difference is used).

According to another aspect, determining the class-specific reference data for each class comprises, for each of the classes, determining an average of the respective at least one distorted training classification results for each of the training data sets associated with the respective class; and determining the reference data for the respective class based on the average.

It has been found that using the average of distorted training data of the respective class for determining the class-specific reference data provides for robust reference data.

According to another aspect, determining whether the input data is manipulated input data is based on a similarity measure, for example a similarity measure which is based on an angle between input vectors, for example a projection similarity measure (which may also be referred to as cosine similarity measure). It has been found useful to use the cosine similarity measure, which is only dependent on the angle between the two input vectors, but not their absolute length. As such, robustness of the determination whether the input data is manipulated input data may be enhanced.

According to another aspect, determining whether the input data is manipulated input data comprises determining that the input data is manipulated input data if the similarity measure between the class-specific reference data for the reference class and the at least one distorted classification result is outside a pre-determined range (for example higher or lower than a pre-determined threshold). For example for the cosine similarity measure, if it is determined that the angle between the class-specific reference data and the distorted classification results is too large, i.e. the cosine of that angle is too small, for example below a pre-determined threshold, then it may be determined that the input data is manipulated input data.

According to another aspect, the manipulated input data comprises data that leads to a wrong classification result. The manipulated data may have been amended purposely by an attacker to lead to a wrong classification result, while, in particular to a human observer, still appearing unamended and/ or appearing to still be in the correct class. According to another aspect, the input data is image data, and manipulated input data is visually close to authentic image data and is classified in a class different from a class of the authentic image data. Whether two images are visually close may be determined by a human observer, or may be determined based on a distance of the two images, for example a norm (for example L2-norm) of the pixel-wise difference between the images. For example, it may be determined whether the distance between to images is less than a pre-determined threshold (which may for example depend on the size of the images, for example height (for example in pixels) and width (for example in pixels) of the image, and which may for example depend on whether the image is a black and white image or whether the image is a colour image).

According to another aspect, the at least one distortion comprises at least one of: pixel wise distortion; histogram distortion; colour distortion; blurring; sharpening; segmentation; translation; rotation; affine transformation; or mirroring. Providing these kinds of distortions may mimic manipulations that an attacker applies to a legitimate image in order to obtain manipulated input data, and may thus increase robustness of the method for determining that the input data is manipulated input data.

According to another aspect, the computer implemented method further comprises: at least one of ignoring the input data for further processing or outputting a warning message, if it is determined that the input data is manipulated input data. It has been found useful to either ignore manipulated input data, or to raise the operator's attention to the fact that manipulated input data has been detected.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processing unit, at least one memory unit and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: an illustration of a first image and a second image;
- Fig. 2: an illustration of a workflow of a conventional feature squeezing method;
- Fig. 3: an illustration of a workflow of a method according to various embodiments for determining whether input data to be classified into one of a plurality of classes is manipulated input data;
- Fig. 4: a diagram containing the ROCs (Receiver Operating Curves) of Feature Squeezing (FS) and providing a comparison among two similarity measures (projection similarity measure and L₁-norm distance);
- Fig. 5: a diagram containing ROCs illustrating a comparison of the 1^{st} order statistics with the predicted classification as reference vector;
- Fig. 6: a diagram containing ROCs illustrating a comparison of feature squeezing as described with reference to Fig. 2, but with the class specific reference vector (however, without concatenation of the various disturbed input data) involving the L₁-norm and a maximum operator as a similarity measure, with the method according to various embodiments including the first order statistics and concatenating the prediction vectors involving the projection similarity measure;
- Fig. 7: a diagram containing ROCs illustrating a comparison of the conventional method described with reference to Fig. 2, with the method according to various embodiments as described with reference to Fig. 3;
- Figs. 8A-D: histograms of scores achieved on training data;
- Figs. 9A-D: bar charts of detection rates gathered against adversarial examples with different minimum confidence level; and
- Fig. 10: a flow diagram illustrating a computer implemented method according to various embodiments for determining whether input data to be classified into one of a plurality of classes is manipulated input data.

### DETAILED DESCRIPTION

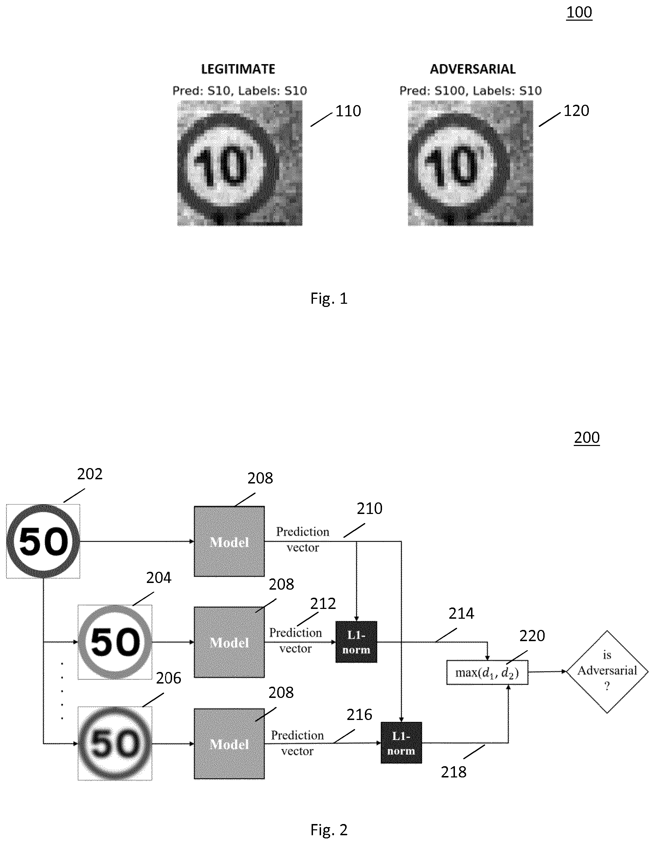

Fig. 1 depicts an illustration 100 of a first image 110 and a second image 120. The first image 110 may have been captured by a camera, for example a camera mounted on a vehicle, for example a camera of a TSR (traffic sign recognition) system. The first image 110 is a natural sample, and shows a traffic sign indicating a speed limit of 10 (for example 10 km/h or 10 mph). As such, it is obvious to a human observer that the first image 110 is to be included in a class S10, which includes images showing traffic signs limiting the speed to 10. When applying an automated, for example computer-implemented, classification method of sufficient quality to the first image 110, the automated classification will result in the first image 110 being classified in class S10, i.e. in the correct class. Since the first image 110 has been captured by the camera and leads to the correct classification result when applying an automated classification method, the first image 110 may be referred to as legitimate (or authentic) image.

The second image 120 is an adversarial sample (in other words: malicious sample; in other words: manipulated sample) which is capable of misleading the model. The second image 120, to a human observer, should also be classified to be in class S10. However, the second image 120 may have purposely been amended by an attacker to lead to a wrong classification result. Compared to the first image 110, the second image 120 merely includes modifications which, to a human observer, would not modify the image so that it should be classified into any class other than class S10. However, the second image 120, when classified by an automated classification method, may lead to a wrong classification result, for example it may be classified into class S100, which includes images showing traffic signs limiting the speed to 100. Since the second image 120 may have been amended purposely to lead to a wrong classification result, the second image 120 may be referred to as manipulated (or adversarial) image.

Above both images in Fig. 1, both the ground-truth label (S10 for both the first image 110 and the second image 120) and a prediction of a classification method (S10 for the first image 110, and S100 for the second image 120) are provided.

Generally, adversarial examples are the perturbed (in other words: manipulated) version of a real, natural input (which may be referred to as legitimate input or authentic input). For example, an adversarial image may be the perturbed version of a real, natural input image. These examples may be carefully created (for example by an attacker) to confuse a given (for example computer-implemented) classifier and may be mostly invisible to the naked eye (or may at least not include any amendments that would lead to the assumption of a human observer that the adversarial input would be in a class different from the class of the real, natural input). Several different attack-goals may exist, depending on the outcome the attacker wishes to achieve with the adversarial (in other words: malicious) inputs:
- change of the classification result; and/ or
- introduction of ambiguity (i.e. the confidence of the predicted class is not high enough to let the classifier be certain).

Adversarial inputs may represent a problem slowing down the deployment of artificial neural network (ANN) based solution. For example, if researchers are bothered with the lack of fully understanding of such methods, the public acceptance may be highly jeopardized. For example, considering an autonomous vehicle relying on an ANN for traffic sign recognition (TSR), if an attacker with an invisible perturbation could lead the system to mistakenly classify a 10 km/h speed limit as a 100 km/h one, the vehicle would proceed at a dangerous speed and could be involved in an accident. This would put the technology at a serious risk.

In order to counter the incumbent threat and to defending neural networks, conventional strategies are to 'clean' the inputs from the hand-crafted perturbations, to design more robust classifiers or to detect the malicious inputs.

In those strategies, one or more distortion (for example pixel-level distortions) may be applied to an input image. Natural examples (in other words: legitimate input) provide similar classification outputs before and after the application of the distortions. Adversarial examples (in other words: malicious inputs) provide different classification outputs for different distortions, since the hand-crafted perturbation that makes the input an adversarial input is generally not robust against image processing distortions.

Fig. 2 shows an illustration 200 of a workflow of a conventional feature squeezing method (Weilin Xu, David Evans and Yanjun Qi: "Feature Squeezing: Detecting Adversarial Examples in Deep Neural Networks", in Network and Distributed Systems Security Symposium (NDSS), February 2018, arXiv preprint: arXiv:170401155v2). At test time, a recorded input 202 is distorted by one or more distortions (squeezers), for example a first squeezer to get a first distorted replica 204 and with a second squeezer to get a second distorted replica 206. Then the (same) model 208 is queried with the input 202 and with every distorted replica 204, 206 of the input 202; in other words, the model 208 is queried with each of the original input 202, and the squeezed versions 204, 206 (for example the original input 202 squeezed with the first squeezer and the original input 202 squeezed with the second squeezer). The model 208 provides a first prediction 210 for the classification of the original input 202, a second prediction 212 for the classification of the first distorted replica 204, and a third prediction 216 for the second distorted replica 206. Each prediction includes a probability vector with elements indicating the predicted (or estimated or computed) probability of the respective input being in the respective class. In other words, each entry in a probability vector is associated with one class, and indicates the probability (or confidentiality) of the respective input being in that class. The probability vectors (in other words: predictions) outputted by the model 208 are compared with each other. In more detail, the prediction vectors 212, 216 produced by the distorted replicas of the input 202 are compared with the prediction vector 210 of the original version of the input 202. The L₁-norm distance (metric) is used as a comparison measure. The L₁-norm distance between to vectors a and b is defined as follows: ${L}_{1} _ distance \left(a, b\right) = {\sum }_{i} \left|{a}_{i}-{b}_{i}\right| .$

A first distance 214 is determined based on the first prediction 210 and the second prediction 212. A second distance 218 is determined based on the first prediction 210 and the third prediction 216. A score is then computed based on the distances 214, 216. In case more than one distortions is used, the score is determined based on the maximum distance 220; in other words, the distance between the prediction for the input 202 and the prediction of the most effective and destructive distortion is determined as the score. It is then determined whether the score is greater than a pre-determined threshold. The higher the score is, the more distant the two probability vectors (the probability vector associated with the input 202, and the probability vector of the most disrupted squeezed version of the input), and the more likely the input 202 is to be adversarial. As such, based on whether the score is greater than the pre-determined threshold, the input nature (legitimate vs. adversarial) 222 may be determined. If the maximum distance 220 is greater than the pre-determined threshold, then the input 202 is determined to be adversarial input. If the maximum distance 220 is not greater than the pre-determined threshold, then the input 202 is determined to be legitimate input.

However, the conventional detection may not be effective against adversarial examples, in particular adversarial examples with lower confidence score (below 70% of accuracy).

According to various embodiments, a statistical defence approach for detecting adversarial examples may be provided based on per-class statistic information.

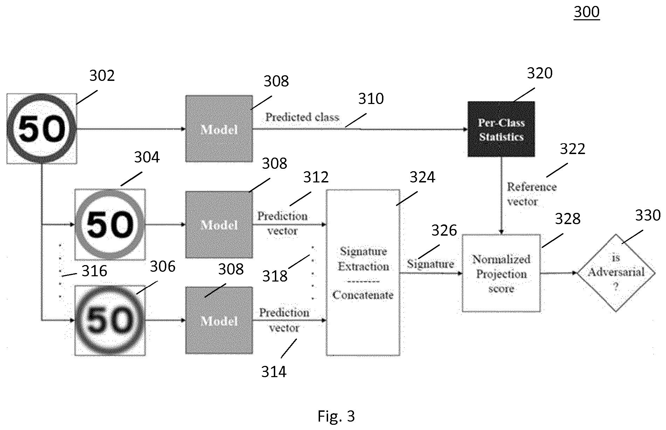

Fig. 3 shows an illustration 300 of a workflow of a method according to various embodiments for determining whether input data 302 to be classified into one of a plurality of classes is manipulated input data. One or more distortions are determined (for example randomly, or for example manually selected by a human operator). The number of distortions may be denoted by N, wherein N is an integer number. Each of the N distortions may (individually) be applied to the original input data 302 to obtain N distorted versions of the input data 302. For example, a first distortion may be applied to the input data 302 to obtain a first distorted version 304 of the input data 302 (in other words: a first distorted input data set), and a second distortion may be applied to the input data 302 to obtain a second distorted version 306 of the input data 302 (in other words: a second distorted input data set). The classifier 308 (which may also be referred to as model 308) may be queried with every of the N distorted replica 304, 306, so as to collect N output vectors of length C, wherein integer number C denotes the number of output classes. For each replica, the i-th entry of the output vector corresponds to a probability determined by the classifier 308 for the respective replica to be in the i-th class (wherein i is an integer number, less or equal than the number C of classes, i.e. 1 ≤ *i* ≤ *C*)*.* For example, the first distorted version 304 of the input data 302 may be classified, and the classification result may be a first prediction vector 312. The second distorted version 306 of the input data 302 may be classified, and the classification result may be a second prediction vector 314.

In Fig. 3, an example with two distortions (and accordingly two distorted versions 304, 306 of the input data 302, and two prediction vectors 312, 314) is illustrated, but it will be understood that any number of distortions may be provided, for example only one distortion, or more than two distortions; accordingly, the number of distorted versions of the input data 302 will vary, like indicated by dots 316, and the number of prediction vectors will vary, like indicated by dots 318. The number of distorted versions of the input data is equal to the number of distortions. The number of prediction vectors is equal to the number of distortions.

Like illustrated by signature extraction and concatenation block 324, all N prediction vectors may be concatenated to get a vector of length NxC, and this vector may be referred to as the (input) signature 326 (in other words: signature vector or signature of the input).

The model 308 may also provide a predicted class 310 for the input data 302. For example, the model 308 may determine a vector of length C based on the input data 302, similar to the computation of the prediction vectors 312, 314, and the index (in other words: row) of the maximum element of the vector may be determined as the predicted class 310.

Class-specific reference data for the predicted class may be determined, for example a per-class statistics 320 may be used to determine a reference vector 322 based on the predicted class 310. In other words, the reference vector 322 may be the first order statistics of the class predicted by the model 308 for the original input data 302. As such, per-class reference vectors may be provided; each output class has its own reference vector.

The respective reference vector for each class may be determined as follows. A plurality of training data sets (for example images) may be provided as a training set. For each training data set in the training set, a concatenation of disturbed versions is determined, using the same N distortions that are used for determining the signature 326. In more detail, for each of the training data sets, each of the N distortions is applied to the respective training data set to obtain N distorted training data sets (which each is a vector of length C). These N distorted training data sets are then concatenated and an average of the concatenation is determined for each class. In other words, for each class, all training data sets belonging to the respective class are determined, and the concatenated N distorted training data sets of all the training data sets in that class are averaged (for example using an element-wise mean). This average for each class yields a plurality of vectors, which may be referred to as first order statistics. The resulting vectors are used as reference vectors. The per-class statistics may in total include C reference vectors, each with a length of NxC.

It has been found that the use of the per-class first order statistics provides that the reference vector is more stable than conventional reference vectors (for example merely the reference class). The first order statistics (which according to various embodiments may be the average of the concatenation of disturbed prediction vectors) may have high values in an entry (or entries) related to the predicted class (assuming the classifier predicts most of the training samples with sufficiently high confidence). In contrast, the predicted class (which is used as a reference vector for the conventional method) of a test input may have a poor similarity score, in particular as the number of classes in the task increases. Using first-order statistics instead of mere prediction vectors, it is possible to provide useful reference even for malicious inputs predicted with poor confidence.

It will be understood that the per-class statistics 320 may be determined in advance of the actual determination whether the input data 302 to be classified into one of the plurality of classis is manipulated input data, since the per-class statistics (i.e. the plurality of potential reference vectors) do not depend on the input data 302. Based on the input data 302 and its predicted class 310, one of the potential reference vectors in the per-class statistics 320 may be determined as the reference vector 322 for the actual determination whether the input data 302 to be classified into one of the plurality of classis is manipulated input data.

Once the signature 326 and the reference vector 322 have been determined, the signature 326 and the reference vector 322 may be compared, for example by applying a measure of similarity on the signature 326 and the reference vector 322, or for example by applying a metric on the signature 326 and the reference vector 322, or for example by applying a norm on the difference between the metric on the signature 326 and the reference vector 322, or for example by determining an angle between the signature 326 and the reference vector 322. According to various embodiments, a normalized projection score 328 is determined based on the signature 326 and the reference vector 322. As a result of the comparison, a single score (which may be referred to as similarity score, and which for example may be a real number) may be provided, which may be used to determine whether the input data 302 is adversarial or not, like indicated by block 330. For example, the score may be compared with a pre-determined threshold, and if the score is less than the threshold (or, depending on the type of the score: if the score is greater than the threshold), it may be determined that the input data 302 is adversarial, and otherwise, it may be determined that the input data 302 is legitimate.

According to various embodiments, the similarity between the signature 326 and the reference vector 322 may be determined as follows. For example, *a* denotes the signature 326, and b denotes the reference vector 322 (or vice versa).

The similarity between two vectors a and b may be determined based on the following equation: $projection \left(a, b\right) = \frac{{a}^{T} b}{{\left‖a\right‖}_{2} {\left‖b\right‖}_{2}} = \frac{{\sum }_{i} {a}_{i} ⋅ {b}_{i}}{{\left‖a\right‖}_{2} {\left‖b\right‖}_{2}}$ *aᵢ* and *bᵢ* are scalar elements of the vectors *a* and b, respectively. ||·∥₂ is the L₂-norm used to normalize the score in the interval [0, 1]. The L₂-norm of a vector a is defined as follows: ${\left‖a\right‖}_{2} = {L}_{2} _ norm \left(a\right) = \sqrt{{\sum }_{i} {\left|{a}_{i}\right|}^{2}}$

Geometrically, the projection similarity measure *projection*(*a, b*) returns the cosine of the angle between the vectors *a* and *b* under test and may be referred to as cosine similarity measure.

The projection similarity measure behaves in an opposite way to the L₁-norm distance: for a proper choice of the vectors *a* and *b*, the projection similarity measure is close to 1 for legitimate examples and close to 0 for adversarial samples. As such, when using the normalized projection score 328 as similarity measure, it may be determined in block 330 that the input data 304 is adversarial input data, if the similarity score is below a pre-determined threshold, and it may be determined in block 330 that the input data 304 is legitimate input data, if the similarity score is greater or equal than the pre-determined threshold.

Using the projection similarity measure, an element-wise multiplication of the signature and the reference vector may be determined (rather than determining a difference of the signature and the reference vector). This annihilates contributions coming from positions in the vectors to compare where both the entries are close to 0 (which may be very likely in probability vectors), thus removing a 'bias' introduced by the L₁-norm distance for legitimate examples (whose expected score would be close to 0). Using the projection similarity may allow real-time comparison of the reference vector 322 and the signature 326.

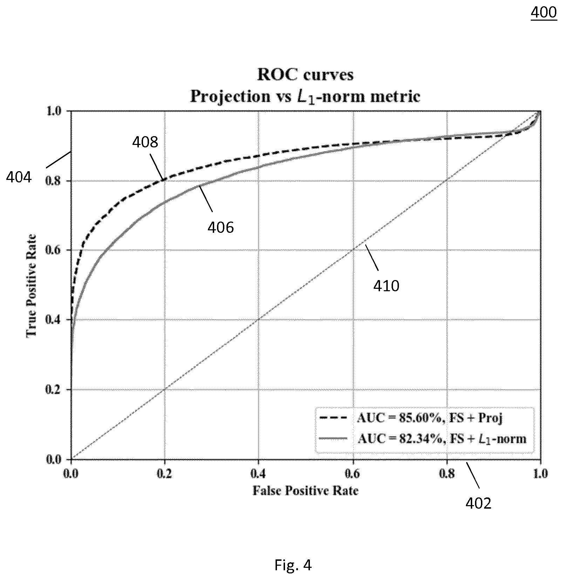

Fig. 4 shows a diagram 400 containing ROCs (Receiver Operating Curves) of Feature Squeezing (FS) and providing a comparison between two similarity measures (projection similarity measure and L₁-norm distance). The ROCs show the true positive rate (the percentage of legitimate examples correctly detected) on a vertical axis 404 against the false positive rate (the percentage of adversarial examples mistakenly classified as legitimate) on a horizontal axis 402 produced by the detector for various threshold values. The closer a curve is to the upper-left corner of the diagram 400, the better the detection rate of the defence method is.

The dashed diagonal line 410 may be called chance-line and is the ROC curves of a random guess by flipping a coin. AUC stands for "area under the curve" and is a performance quantifier of the ROC curves. It describes the percentage of the total area in the diagram 400 that is under the corresponding curve. The higher the AUC, the better the defence method is.

It will be understood that either the true positive rate or the false positive rate may be set by setting the threshold for the similarity score, and that the remaining one of the true positive rate or the false positive rate will have a value depending on the quality of the detection method. For example, if the threshold is set to provide for a pre-determined true positive rate, the false positive rate will have a certain value, and the false positive rate will be lower for more effective detection methods. Similarly, if the threshold is set to provide for a pre-determined false positive rate, the true positive rate will have a certain value, and the true positive rate will be higher for more effective detection methods.

A first curve 406 (solid line) illustrates the true and false positive rates for feature squeezing as described with reference to Fig. 2, with the L₁-norm as a similarity measure. A second curve 408 (dashed line) illustrates the true and false positive rates for feature squeezing as described with reference to Fig. 2, but with the projection similarity measure instead of the L₁-norm. Fig. 4 illustrates that the projection similarity measure provides an improvement of about 3% of AUC compared to the L₁-norm (AUC of 85.60% for feature squeezing with the projection similarity measure compared to AUC of 82.34% for feature squeezing with L₁-norm).

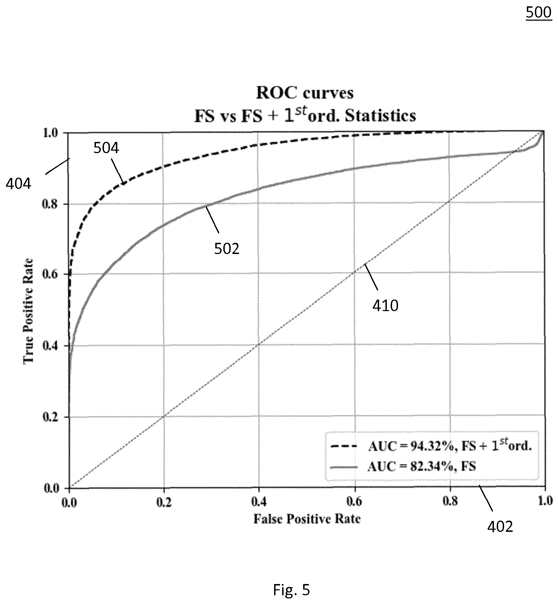

Fig. 5 shows a diagram 500 containing ROCs illustrating a comparison of the 1^{st} order statistics with the predicted classification as reference vector. Horizontal axis 402, vertical axis 404, and line 410 have the same meaning as the respective items shown in Fig. 4. A first curve 502 (solid line) illustrates the true and false positive rates for feature squeezing as described with reference to Fig. 2, with classification result of the input data as a reference vector. A second curve 504 (dashed line) illustrates the true and false positive rates for feature squeezing as described with reference to Fig. 2, but with the class specific reference vector (however, without concatenation of the various disturbed input data). The results shown in Fig. 5 were extracted using the L₁-norm rather than the projection similarity measure. This illustrates the improvement produced by the 1^{st} order statistics, and illustrates that the 1^{st} order statistic works with various similarity measures and is not restricted to using the projection similarity measure. Fig. 5 illustrates that the first order statistics provides an improvement of about 12% of AUC compared to using the classification results of the input data as a reference vector (AUC of 94,32% for the first order statistics compared to AUC of 82.34% for feature squeezing with norm the classification results of the input data as a reference vector). As expected, the statistic vectors provide an increased stability to the reference vector. This can be also noticed by the converging behaviour of the second curve 504 on the top right corner of the diagram 500.

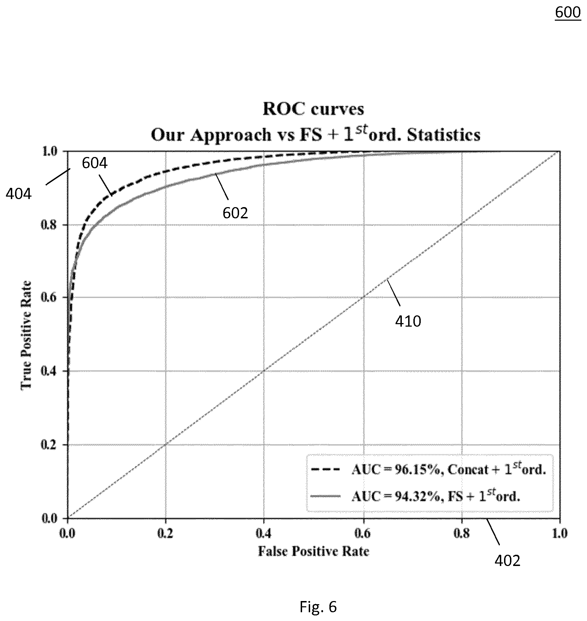

Fig. 6 shows a diagram 600 containing ROCs illustrating a comparison of feature squeezing as described with reference to Fig. 2, but with the class specific reference vector (however, without concatenation of the various disturbed input data, and wherein the L₁-norm of the difference between the 1^{st} order statistic of the prediction vector 210 and the prediction on every distorted replica (212 and 216) is used to produce multiple scores (as much as the number of distortions), and wherein then the maximum of the L₁-norm scores is used as the similarity measure), with the method according to various embodiments including the first order statistics and concatenating the prediction vectors, wherein the L₁-norm of the difference between the 1^{st} order statistic and the concatenation of the prediction on every distorted replica (212 and 216) is used to produce a single similarity measure. Horizontal axis 402, vertical axis 404, and line 410 have the same meaning as the respective items shown in Fig. 4. A first curve 602 (solid line) illustrates the true and false positive rates for feature squeezing as described with reference to Fig. 2, but with the class specific reference vector (however, without concatenation of the various disturbed input data) and a maximum operator in the similarity measure. A second curve 604 (dashed line) illustrates the true and false positive rates for the method according to various embodiments including the first order statistics and concatenating the prediction vectors involving the projection similarity measure. Fig. 6 illustrates that the method according to various embodiments including the first order statistics and concatenating the prediction vectors involving the projection similarity measure provides an improvement of about 2% of AUC compared to feature squeezing as described with reference to Fig. 2, but with the class specific reference vector (however, without concatenation of the various disturbed input data) and a maximum operator in the similarity measure (AUC of 96.15% for the method according to various embodiments including the first order statistics and concatenating the prediction vectors involving the projection similarity measure compared to AUC of 94.32% for feature squeezing as described with reference to Fig. 2, but with the class specific reference vector (however, without concatenation of the various disturbed input data), involving the L₁-norm and a maximum operator as a similarity measure). It is also worth noting that the projection similarity measure outperforms the L₁-norm distance in every configuration.

Using the signature structure (involving concatenating the prediction vectors, and using the projection similarity measure) according to various embodiments makes the similarity score dependent on all the distortions used (rather than only from the most destructive one when using the max operator over the L₁ distances).

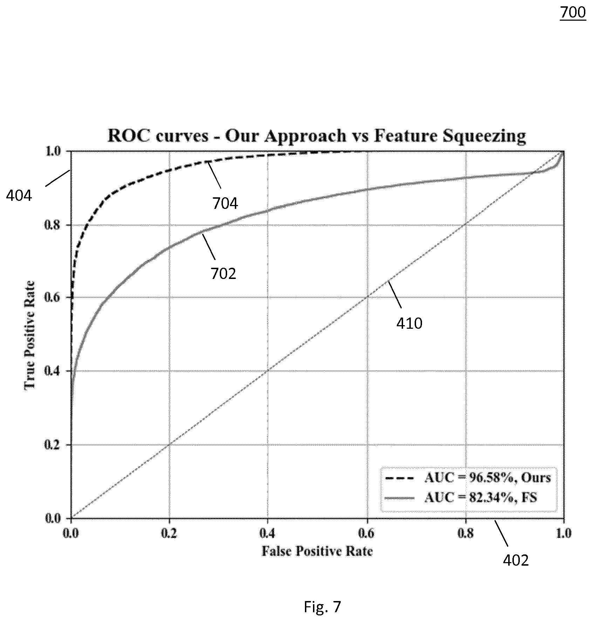

Fig. 7 shows a diagram 700 containing ROCs illustrating a comparison of the conventional method described with reference to Fig. 2, with the method according to various embodiments as described with reference to Fig. 3. Horizontal axis 402, vertical axis 404, and line 410 have the same meaning as the respective items shown in Fig. 4. A first curve 702 (solid line) illustrates the true and false positive rates for the conventional method described with reference to Fig. 2. A second curve 704 (dashed line) illustrates the true and false positive rates for the method according to various embodiments as described with reference to Fig. 3. Fig. 7 illustrates that the method according to various embodiments as described with reference to Fig. 3 provides an improvement of about 15% of AUC compared to the conventional method described with reference to Fig. 2 (AUC of 96.58% for the method according to various embodiments as described with reference to Fig. 3 compared to AUC of 82.34% for the conventional method described with reference to Fig. 2).

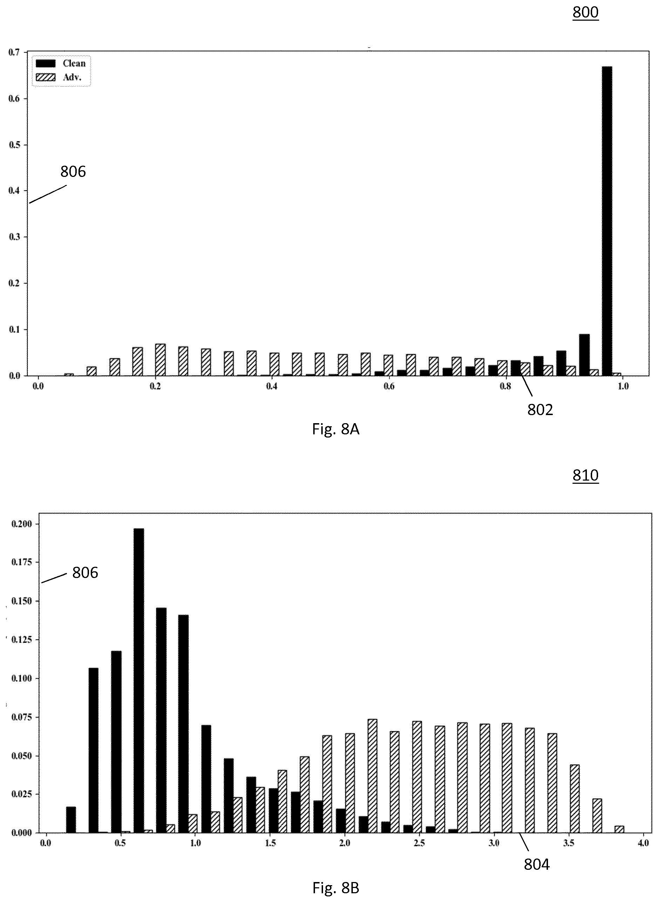

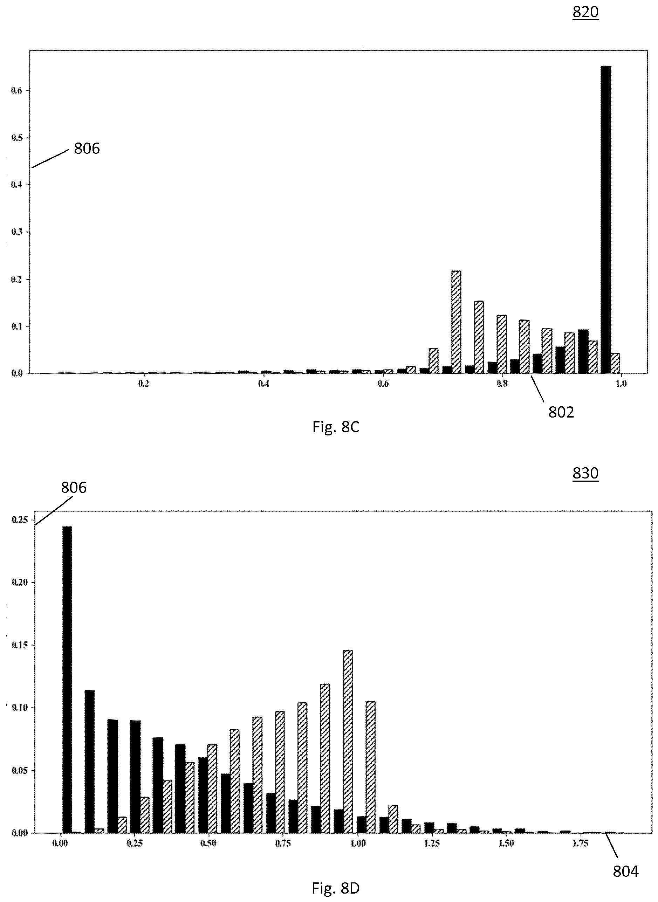

Figs. 8A to 8D show histograms 800, 810, 820, 830 of scores achieved on training data. Horizontal axes 802 denote the similarity score (in other words: the detection score value) based on the projection similarity measure, and horizontal axes 804 denote the similarity score (in other words: the detection score value) based on L₁-norm and the maximum operator. Vertical axes 806 denote how frequent a respective similarity score occurs (i.e. the portion of test-samples with the respective detection score value). Solid bars are related to clean (in other words: legitimate or authentic) input data. Hatched fill bars are related to adversarial (in other words: manipulated) input data. Fig. 8A shows a histogram 800 for the method according to various embodiments as described with reference to Fig. 3 using the projection similarity measure. Fig. 8B shows a histogram 810 for the method according to various embodiments as described with reference to Fig. 3, but using the L₁-norm instead of the projection similarity measure. Fig. 8C shows a histogram 820 for the conventional method as described with reference to Fig. 2, but using the projection similarity measure instead of the L₁-norm. Fig. 8D shows a histogram 830 for the conventional method described with reference to Fig. 2, using the L₁-norm. It can be seen that the histograms of the method according to various embodiments provide better separation between legitimate input data and adversarial input data than the conventional method. The projection similarity measure produces scores very close to 1 for almost every legitimate input data.

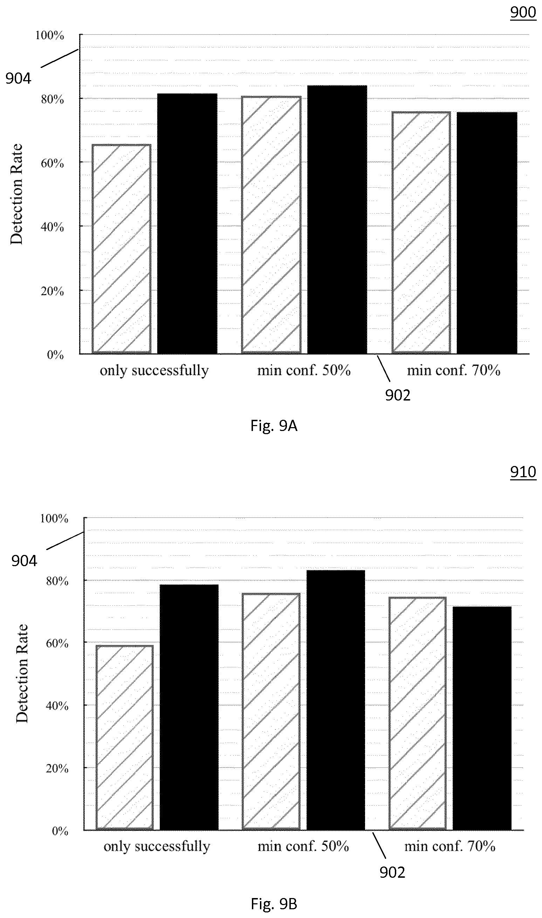

Figs. 9A to 9D show bar charts 900, 910, 920, 930 of detection rates gathered against adversarial examples with different minimum confidence level. Inputs below the requested level are rejected during the evaluation. The detection rates are gathered using six different attack-sets. The threshold was set to reject only 5% of legitimate examples as malicious. The hatched filled bars refer to conventional feature squeezing as described with reference to Fig. 2. The solid bars refer to the method according to various embodiments described with reference to Fig. 3. Horizontal axis 902 indicates the confidentiality, and the vertical axis 904 indicates the detection rate. For the results labelled "only successfully", only inputs which indeed lead to wrong classification outputs (i.e. only input data that is known to be malicious (in other words: manipulated; in other words: adversarial) has been used).

Figs. 9A and 9B show bar charts 900, 910 related to a white-box attack scenario (where the adversarial samples are generated using the classifier (or network) to defend). Fig. 9A shows the bar chart 900 for results when using the projection similarity measure. Fig. 9B shows the bar chart 910 for results when using the L₁-norm. It can be seen from Figs. 9A and 9B that using the projection similarity measure always outperforms the L₁-norm. As the confidence level increases, the conventional method and the method according to various embodiments get closer. It will be noted that the method according to various embodiments is effective also for low confident adversarial examples.

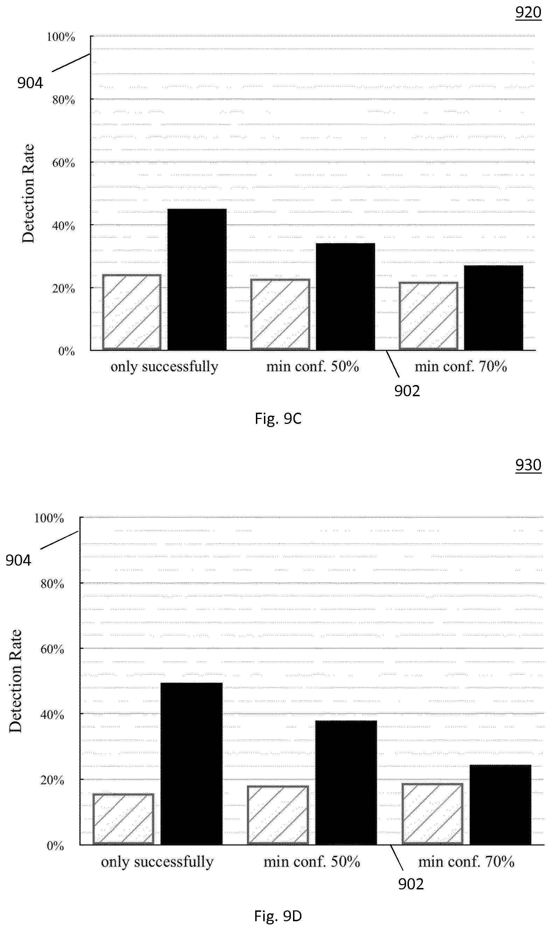

Figs. 9C and 9D show bar charts 920, 930 related to a black-box attack scenario (where adversarial inputs are generated using a substitute classifier (or network) and then transferred to the defended classifier (or network)). Fig. 9C shows the bar chart 920 for results when using the projection similarity measure. Fig. 9D shows the bar chart 930 for results when using the L₁-norm. It can be seen that the method according to various embodiments considerably outperforms the conventional method in every setting.

The results illustrated in Figs. 8A to 8D and Figs. 9A to 9D were obtained using the CIFAR10 data set.

The detection method according to various embodiments rejects a possible malicious input, exploiting the orthogonality between the signature vector extracted and the first order statistics of the predicted class. Conversely, a legitimate sample would align with the corresponding first order statistics, thus recognized as a natural, real sample.

The method according to various embodiments outperforms the conventional method when defending against malicious examples which experience very high confidence results: the projection similarity measure provides better separations than the L₁-norm distance. In addition, the method according to various embodiments is able to tackle adversarial examples predicted with poor confidence, thus enabling the defence of more uncertain classifiers, namely models which in average produce prediction confidence scores below 80-70%, and the defence against attacks which aim at introducing ambiguity rather than misclassification, namely those adversarial examples which lower the confidence of the predicted class.

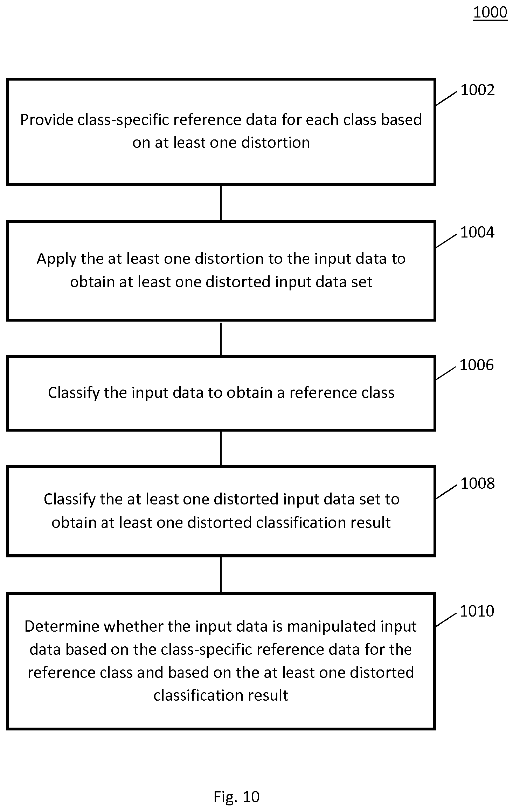

Fig. 10 shows a flow diagram 1000 illustrating a computer implemented method according to various embodiments for determining whether input data to be classified into one of a plurality of classes is manipulated input data. At 1002, class-specific reference data may be provided for each class based on at least one distortion. At 1004, the at least one distortion may be applied to the input data to obtain at least one distorted input data set. At 1006, the input data may be classified to obtain a reference class. At 1008, the at least one distorted input data set may be classified to obtain at least one distorted classification result. At 1010, it may be determined whether the input data is manipulated input data based on the class-specific reference data for the reference class and based on the at least one distorted classification result.

According to various embodiments, the class-specific reference data for each class are determined based on: determining a plurality of training data sets, each training data set associated with a respective class; for each of the classes, for each of the training data sets associated with the respective class: applying the at least one distortion to the respective training data set to obtain at least one distorted training data set, and classifying the at least one distorted training data set to obtain at least one distorted training classification result for the respective training data set; and determining the reference data for the respective class based on the respective at least one distorted training classification results for each of the training data sets associated with the respective class.

According to various embodiments, the at least one distortion includes a plurality of distortions; and determining the class-specific reference data for each class includes, for each of the classes, for each of the training data sets associated with the respective class: applying the plurality of distortions to the respective training data set to obtain a plurality of distorted training data sets, classifying the plurality of distorted training data sets to obtain a plurality of distorted training classification results, and determining the reference data for the respective class based on a concatenation of the plurality of distorted training classification results.

According to various embodiments, the computer implemented method may further include: applying the plurality of distortions to the input data to obtain a plurality of distorted input data sets; classifying the plurality of distorted input data sets to obtain a plurality of distorted classification results; concatenating the plurality of distorted classification results to obtain a concatenated distorted classification result; and determining whether the input data is manipulated input data based on the class-specific reference data for the reference class and based on the concatenated distorted classification result.

According to various embodiments, determining the class-specific reference data for each class includes, for each of the classes, determining an average of the respective at least one distorted training classification results for each of the training data sets associated with the respective class; and determining the reference data for the respective class based on the average.

According to various embodiments, determining whether the input data is manipulated input data is based on a similarity measure. According to various embodiments, the similarity measure is based on an angle between input vectors. According to various embodiments, the similarity measure includes or is a projection similarity measure.

According to various embodiments, determining whether the input data is manipulated input data includes determining that the input data is manipulated input data if the similarity measure between the class-specific reference data for the reference class and the at least one distorted classification result is outside a pre-determined range.

According to various embodiments, the manipulated input data includes or is data that leads to a wrong classification result. According to various embodiments, the input data is image data; and manipulated input data is visually close to authentic image data and is classified in a class different from a class of the authentic image data.

According to various embodiments, the at least one distortion includes at least one of: pixel wise distortion; histogram distortion; colour distortion; blurring; sharpening; segmentation; translation; rotation; affine transformation; or mirroring.

According to various embodiments, the computer implemented method may further include at least one of ignoring the input data for further processing or outputting a warning message, if it is determined that the input data is manipulated input data.

Each of the steps 1002, 1004, 1006, 1008, 1010 and the further steps described above may be performed by computer hardware components.

It will be understood that an adversarial image may be an image that has been manipulated based on an authentic image, or may be an image of a real-world object that has been manipulated. For example, such a manipulated real-world object may seem legitimate to a human observer, but may lead to wrong classification results.

### Reference numeral list

- 100: illustration of first image and second image
- 110: first image
- 120: second image

- 200: illustration of a workflow of a conventional feature squeezing method
- 202: recorded input
- 204: first distorted replica
- 206: second distorted replica
- 208: model
- 210: first prediction
- 212: second prediction
- 214: first distance
- 216: third prediction
- 218: second distance
- 220: maximum distance
- 222: nature of input

- 300: illustration of a workflow of a method according to various embodiments
- 302: input data
- 304: first distorted version
- 306: second distorted version
- 308: classifier
- 310: predicted class
- 312: first prediction vector
- 314: second prediction vector
- 316: dots indicating further distorted versions
- 318: dots indicating further prediction vectors
- 320: per-class statistics
- 322: reference vector
- 324: concatenation block
- 326: signature
- 328: normalized projection score
- 330: block

- 400: diagram containing receiver operating curves of feature squeezing
- 402: horizontal axis
- 404: vertical axis
- 406: first curve
- 408: second curve
- 410: chance-line

- 500: diagram containing receiver operating curves
- 502: first curve
- 504: second curve

- 600: diagram containing receiver operating curves
- 602: first curve
- 604: second curve

- 700: diagram containing receiver operating curves
- 702: first curve
- 704: second curve

- 800: histogram
- 802: horizontal axis
- 804: horizontal axis
- 806: vertical axis

- 810: histogram
- 820: histogram
- 830: histogram

- 900: bar chart
- 902: horizontal axis
- 904: vertical axis
- 910: bar chart
- 920: bar chart
- 930: bar chart

- 1000: flow diagram
- 1002: method step
- 1004: method step
- 1006: method step
- 1008: method step

## Claims

1. Computer implemented method for determining whether input data (302) to be classified into one of a plurality of classes is manipulated input data, the method comprising the following steps carried out by computer hardware components:
- providing (1002) class-specific reference data (320) for each class based on at least one distortion;
- applying (1004) the at least one distortion to the input data (302) to obtain at least one distorted input data set (304, 306, 316);
- classifying (1006) the input data (302) to obtain a reference class (310);
- classifying (1008) the at least one distorted input data set (304, 306, 316) to obtain at least one distorted classification result (312, 314, 318); and
- determining (1010) whether the input data (302) is manipulated input data based on the class-specific reference data (322) for the reference class (310) and based on the at least one distorted classification result (312, 314, 318);
wherein the class-specific reference data (320) for each class are determined based on:
- determining a plurality of training data sets, each training data set associated with a respective class;
- for each of the classes:
- for each of the training data sets associated with the respective class:
- applying the at least one distortion to the respective training data set to obtain at least one distorted training data set; and
- classifying the at least one distorted training data set to obtain at least one distorted training classification result for the respective training data set; and
- determining the reference data for the respective class based on the respective at least one distorted training classification results for each of the training data sets associated with the respective class.

2. The computer implemented method of claim 1,
wherein the at least one distortion comprises a plurality of distortions; and wherein determining the class-specific reference data for each class comprises, for each of the classes, for each of the training data sets associated with the respective class:
- applying the plurality of distortions to the respective training data set to obtain a plurality of distorted training data sets;
- classifying the plurality of distorted training data sets to obtain a plurality of distorted training classification results; and
- determining the reference data for the respective class based on a concatenation of the plurality of distorted training classification results.

3. The computer implemented method of claim 2, further comprising the following steps carried out by the computer hardware components:
- applying the plurality of distortions to the input data (302) to obtain a plurality of distorted input data sets (304, 306, 316);
- classifying the plurality of distorted input data sets (304, 306, 316) to obtain a plurality of distorted classification results (312, 314, 318);
- concatenating the plurality of distorted classification results (312, 314, 318) to obtain a concatenated distorted classification result (326); and
- determining (1010) whether the input data (302) is manipulated input data based on the class-specific reference data (322) for the reference class (310) and based on the concatenated distorted classification result (326).

4. The computer implemented method of at least one of claims 1 to 3, wherein determining the class-specific reference data for each class comprises, for each of the classes,
- determining an average of the respective at least one distorted training classification result for each of the training data sets associated with the respective class; and
- determining the reference data for the respective class based on the average.

5. The computer implemented method of at least one of claims 1 to 4, wherein determining (1010) whether the input data (302) is manipulated input data is based on a similarity measure (328).

6. The computer implemented method of claim 5,
wherein the similarity measure (328) is based on an angle between input vectors.

7. The computer implemented method of at least one of claims 5 to 6, wherein the similarity measure (328) comprises a projection similarity measure.

8. The computer implemented method of at least one of claims 5 to 7, wherein determining (1010) whether the input data (302) is manipulated input data comprises determining that the input data (302) is manipulated input data if the similarity measure (328) between the class-specific reference data (322) for the reference class (310) and the at least one distorted classification result (312, 314, 318, 326) is outside a pre-determined range.

9. The computer implemented method of at least one of claims 1 to 8, wherein the manipulated input data (302) comprises data that leads to a wrong classification result.

10. The computer implemented method of at least one of claims 1 to 9,
wherein the input data (302) is image data; and
wherein manipulated input data is visually close to authentic image data and is classified in a class different from a class of the authentic image data.

11. The computer implemented method of claim 10,
wherein the at least one distortion comprises at least one of:
pixel wise distortion;
histogram distortion;
colour distortion;
blurring;
sharpening;
segmentation;
translation;
rotation;
affine transformation; or
mirroring.

12. The computer implemented method of at least one of claims 1 to 11, further comprising the following step carried out by the computer hardware components:
at least one of ignoring the input data (302) for further processing or
outputting a warning message, if it is determined that the input data (302) is manipulated input data.

13. Computer system, the computer system comprising a plurality of computer
hardware components configured to carry out the steps of the computer
implemented method of at least one of claims 1 to 12.

14. Non-transitory computer readable medium comprising instructions for carrying out the computer implemented method of at least one of claims 1 to 12.

## Patentansprüche

1. Computerimplementiertes Verfahren zum Ermitteln, ob Eingabedaten (302), die in eine einer Vielzahl von Klassen zu klassifizieren sind, manipulierte Eingabedaten sind, wobei das Verfahren die folgenden durch Computerhardwarekomponenten ausgeführten Schritte umfasst:
- Bereitstellen (1002) klassenspezifischer Referenzdaten (320) für jede Klasse basierend auf zumindest einer Verzerrung;
- Anwenden (1004) der zumindest einen Verzerrung auf die Eingabedaten (302), um zumindest einen verzerrten Eingabedatensatz (304, 306, 316) zu erhalten;
- Klassifizieren (1006) der Eingabedaten (302), um eine Referenzklasse (310) zu erhalten;
- Klassifizieren (1008) des zumindest einen verzerrten Eingabedatensatzes (304, 306, 316), um zumindest ein verzerrtes Klassifikationsergebnis (312, 314, 318) zu erhalten; und
- Ermitteln (1010), ob die Eingabedaten (302) manipulierte Eingabedaten sind, basierend auf den klassenspezifischen Referenzdaten (322) für die Referenzklasse (310) und basierend auf dem zumindest einen verzerrten Klassifikationsergebnis (312, 314, 318);
wobei die klassenspezifischen Referenzdaten (320) für jede Klasse basierend auf Folgendem ermittelt werden:
- Ermitteln einer Vielzahl von Trainingsdatensätzen, wobei jeder Trainingsdatensatz einer jeweiligen Klasse zugeordnet ist;
- für jede der Klassen:
- für jeden der Trainingsdatensätze, die der jeweiligen Klasse zugeordnet sind:
- Anwenden der zumindest einen Verzerrung auf den jeweiligen Trainingsdatensatz, um zumindest einen verzerrten Trainingsdatensatz zu erhalten; und
- Klassifizieren des zumindest einen verzerrten Trainingsdatensatzes, um zumindest ein verzerrtes Trainingsklassifikationsergebnis für den jeweiligen Trainingsdatensatz zu erhalten; und
- Ermitteln der Referenzdaten für die jeweilige Klasse basierend auf den jeweiligen zumindest einen verzerrten Trainingsklassifikationsergebnissen für jeden der Trainingsdatensätze, die der jeweiligen Klasse zugeordnet sind.

2. Computerimplementiertes Verfahren nach Anspruch 1,
wobei die zumindest eine Verzerrung eine Vielzahl von Verzerrungen umfasst; und
wobei das Ermitteln der klassenspezifischen Referenzdaten für jede Klasse für jede der Klassen für jeden der Trainingsdatensätze, die der jeweiligen Klasse zugeordnet sind, umfasst:
- Anwenden der Vielzahl von Verzerrungen auf den jeweiligen Trainingsdatensatz, um eine Vielzahl von verzerrten Trainingsdatensätzen zu erhalten;
- Klassifizieren der Vielzahl von verzerrten Trainingsdatensätzen, um eine Vielzahl von verzerrten Trainingsklassifikationsergebnissen zu erhalten; und
- Ermitteln der Referenzdaten für die jeweilige Klasse basierend auf einer Verknüpfung der Vielzahl von verzerrten Trainingsklassifikationsergebnissen.

3. Computerimplementiertes Verfahren nach Anspruch 2, ferner umfassend die folgenden durch die Computerhardwarekomponenten ausgeführten Schritte:
- Anwenden der Vielzahl von Verzerrungen auf die Eingabedaten (302), um eine Vielzahl von verzerrten Eingabedatensätzen (304, 306, 316) zu erhalten;
- Klassifizieren der Vielzahl von verzerrten Eingabedatensätzen (304, 306, 316), um eine Vielzahl von verzerrten Klassifikationsergebnissen (312, 314, 318) zu erhalten;
- Verknüpfen der Vielzahl von verzerrten Klassifikationsergebnissen (312, 314, 318), um ein verknüpftes verzerrtes Klassifikationsergebnis (326) zu erhalten; und
- Ermitteln (1010), ob die Eingabedaten (302) manipulierte Eingabedaten sind, basierend auf den klassenspezifischen Referenzdaten (322) für die Referenzklasse (310) und basierend auf dem verknüpften verzerrten Klassifikationsergebnis (326).

4. Computerimplementiertes Verfahren nach zumindest einem der Ansprüche 1 bis 3,
wobei das Ermitteln der klassenspezifischen Referenzdaten für jede Klasse für jede der Klassen umfasst, dass
- ein Mittelwert des jeweiligen zumindest einen verzerrten Trainingsklassifikationsergebnisses für jeden der Trainingsdatensätze, die der jeweiligen Klasse zugeordnet sind, ermittelt wird; und
- die Referenzdaten für die jeweilige Klasse basierend auf dem Mittelwert ermittelt werden.

5. Computerimplementiertes Verfahren nach zumindest einem der Ansprüche 1 bis 4,
wobei das Ermitteln (1010), ob die Eingabedaten (302) manipulierte Eingabedaten sind, auf einem Ähnlichkeitsmaß (328) basiert.

6. Computerimplementiertes Verfahren nach Anspruch 5,
wobei das Ähnlichkeitsmaß (328) auf einem Winkel zwischen Eingabevektoren basiert.

7. Computerimplementiertes Verfahren nach zumindest einem der Ansprüche 5 bis 6,
wobei das Ähnlichkeitsmaß (328) ein Projektionsähnlichkeitsmaß umfasst.

8. Computerimplementiertes Verfahren nach zumindest einem der Ansprüche 5 bis 7,
wobei das Ermitteln (1010), ob die Eingabedaten (302) manipulierte Eingabedaten sind, das Ermitteln, dass die Eingabedaten (302) manipulierte Eingabedaten sind, wenn das Ähnlichkeitsmaß (328) zwischen den klassenspezifischen Referenzdaten (322) für die Referenzklasse (310) und dem zumindest einen verzerrten Klassifikationsergebnis (312, 314, 318, 326) außerhalb eines vorbestimmten Bereichs liegt, umfasst.

9. Computerimplementiertes Verfahren nach zumindest einem der Ansprüche 1 bis 8,
wobei die manipulierten Eingabedaten (302) Daten umfassen, die zu einem falschen Klassifikationsergebnis führen.

10. Computerimplementiertes Verfahren nach zumindest einem der Ansprüche 1 bis 9,
wobei die Eingabedaten (302) Bilddaten sind; und
wobei manipulierte Eingabedaten visuell nahe an authentischen Bilddaten liegen und in einer Klasse klassifiziert werden, die sich von einer Klasse der authentischen Bilddaten unterscheidet.

11. Computerimplementiertes Verfahren nach Anspruch 10,
wobei die zumindest eine Verzerrung zumindest eines umfasst von:
pixelweiser Verzerrung;
Histogrammverzerrung;
Farbverzerrung;
Weichzeichnen;
Scharfzeichnen;
Segmentierung;
Translation;
Rotation;
affine Transformation; oder
Spiegeln.

12. Computerimplementiertes Verfahren nach zumindest einem der Ansprüche 1 bis 11, ferner umfassend den folgenden durch die Computerhardwarekomponenten ausgeführten Schritt:
zumindest eines von Ignorieren der Eingabedaten (302) für eine weitere Verarbeitung oder Ausgeben einer Warnmeldung, wenn ermittelt wird, dass die Eingabedaten (302) manipulierte Eingabedaten sind.

13. Computersystem, wobei das Computersystem eine Vielzahl von Computerhardwarekomponenten umfasst, die ausgestaltet sind, um die Schritte des computerimplementierten Verfahrens nach zumindest einem der Ansprüche 1 bis 12 auszuführen.

14. Nicht-transitorisches durch einen Computer lesbares Medium, umfassend Anweisungen zum Ausführen des computerimplementierten Verfahrens nach zumindest einem der Ansprüche 1 bis 12.

## Revendications

1. Procédé mis en œuvre par ordinateur pour déterminer si des données d'entrée (302) à classer dans l'une d'une pluralité de classes sont des données d'entrée manipulées,
le procédé comprenant les étapes suivantes mises en œuvre par des composants matériels d'ordinateur :
- fournir (1002) des données de référence spécifiques à la classe (320) pour chaque classe sur la base d'au moins une distorsion ;
- appliquer (1004) ladite au moins une distorsion aux données d'entrée (302) pour obtenir au moins un ensemble de données d'entrée déformé (304, 306, 316) ;
- classer (1006) les données d'entrée (302) pour obtenir une classe de référence (310) ;
- classer (1008) ledit au moins un ensemble de données d'entrée déformé (304, 306, 316) pour obtenir au moins un résultat de classification déformé (312, 314, 318) ; et
- déterminer (1010) si les données d'entrée (302) sont des données d'entrée manipulées sur la base des données de référence spécifiques à la classe (322) pour la classe de référence (310) et sur la base dudit au moins un résultat de classification déformé (312, 314, 318) ;
dans lequel les données de référence spécifiques à la classe (320) pour chaque classe sont déterminées sur la base des opérations consistant à :
- déterminer une pluralité d'ensembles de données d'entraînement, chaque ensemble de données d'entraînement étant associé à une classe respective ;
- pour chacune des classes :
- pour chacun des ensembles de données d'entraînement associés à la classe respective :
- appliquer ladite au moins une distorsion à l'ensemble de données d'entraînement respectif pour obtenir au moins un ensemble de données d'entraînement déformé ; et
- classer ledit au moins un ensemble de données d'entraînement déformé pour obtenir au moins un résultat de classification d'entraînement déformé pour l'ensemble de données d'entraînement respectif ; et
- déterminer les données de référence pour la classe respective sur la base dudit au moins un résultat respectif de classification d'entraînement déformé pour chacun des ensembles de données d'entraînement associés à la classe respective.

2. Procédé mis en œuvre par ordinateur selon la revendication 1,
dans lequel ladite au moins une distorsion comprend une pluralité de distorsions ; et
dans lequel la détermination des données de référence spécifiques à la classe pour chaque classe comprend, pour chacune des classes, pour chacun des ensembles de données d'entraînement associés à la classe respective, les opérations consistant à :
- appliquer la pluralité de distorsions à l'ensemble de données d'entraînement respectif pour obtenir une pluralité d'ensembles de données d'entraînement déformés ;
- classer la pluralité d'ensembles de données d'entraînement déformés pour obtenir une pluralité de résultats de classification d'entraînement déformés ; et
- déterminer les données de référence pour la classe respective sur la base d'une concaténation de la pluralité de résultats de classification d'entraînement déformés.

3. Procédé mis en œuvre par ordinateur selon la revendication 2, comprenant en outre les étapes suivantes mises en œuvre par les composants matériels d'ordinateur :
- appliquer la pluralité de distorsions aux données d'entrée (302) pour obtenir une pluralité d'ensembles de données d'entrée déformés (304, 306, 316) ;
- classer la pluralité d'ensembles de données d'entrée déformés (304, 306, 316) pour obtenir une pluralité de résultats de classification déformés (312, 314, 318) ;
- concaténer la pluralité de résultats de classification déformés (312, 314, 318) pour obtenir un résultat de classification déformé concaténé (326) ; et
- déterminer (1010) si les données d'entrée (302) sont des données d'entrée manipulées sur la base des données de référence spécifiques à la classe (322) pour la classe de référence (310) et sur la base du résultat de classification déformé concaténé (326).

4. Procédé mis en œuvre par ordinateur selon l'une quelconque des revendications 1 à 3,
dans lequel l'étape consistant à déterminer les données de référence spécifiques à la classe pour chaque classe comprend, pour chacune des classes, de
- déterminer une moyenne dudit au moins un résultat respectif de classification d'entraînement déformé pour chacun des ensembles de données d'entraînement associés à la classe respective ; et
- déterminer les données de référence pour la classe respective sur la base de la moyenne.

5. Procédé mis en œuvre par ordinateur selon l'une quelconque des revendications 1 à 4,
dans lequel l'étape consistant à déterminer (1010) si les données d'entrée (302) sont des données d'entrée manipulées est basée sur une mesure de similarité (328).

6. Procédé mis en œuvre par ordinateur selon la revendication 5,
dans lequel la mesure de similarité (328) est basée sur un angle entre des vecteurs d'entrée.

7. Procédé mis en œuvre par ordinateur selon l'une quelconque des revendications 5 à 6,
dans lequel la mesure de similarité (328) comprend une mesure de similarité de projection.

8. Procédé mis en œuvre par ordinateur selon l'une quelconque des revendications 5 à 7,
dans lequel l'étape consistant à déterminer (1010) si les données d'entrée (302) sont des données d'entrée manipulées comprend de déterminer que les données d'entrée (302) sont des données d'entrée manipulées si la mesure de similarité (328) entre les données de référence spécifiques à la classe (322) pour la classe de référence (310) et ledit au moins un résultat de classification déformé (312, 314, 318, 326) est à l'extérieur d'une plage prédéterminée.

9. Procédé mis en œuvre par ordinateur selon l'une quelconque des revendications 1 à 8,
dans lequel les données d'entrée manipulées (302) comprennent des données qui conduisent à un résultat de classification erroné.

10. Procédé mis en œuvre par ordinateur selon l'une quelconque des revendications 1 à 9,
dans lequel les données d'entrée (302) sont des données d'image ; et
dans lequel les données d'entrée manipulées sont visuellement proches de données d'image authentiques et sont classées dans une classe différente d'une classe des données d'image authentiques.

11. Procédé mis en œuvre par ordinateur selon la revendication 10,
dans lequel ledit au moins une distorsion comprend l'une au moins des distorsions suivantes :
distorsion pixel par pixel ;
distorsion d'histogramme ;
distorsion de couleur ;
floutage ;
accentuation de netteté ;
segmentation ;
translation ;
rotation ;
transformation affine ; ou
mise en miroir.

12. Procédé mis en œuvre par ordinateur selon l'une quelconque des revendications 1 à 11, comprenant en outre l'étape suivante exécutée par les composants matériels d'ordinateur :
ignorer les données d'entrée (302) pour un traitement ultérieur et/ou délivrer un message d'avertissement s'il est déterminé que les données d'entrée (302) sont des données d'entrée manipulées.

13. Système d'ordinateur, le système d'ordinateur comprenant une pluralité de composants matériels d'ordinateur configurés pour exécuter les étapes du procédé mis en œuvre par ordinateur selon l'une quelconque des revendications 1 à 12.

14. Support non transitoire lisible par ordinateur comprenant des instructions pour exécuter le procédé mis en œuvre par ordinateur selon l'une quelconque des revendications 1 à 12.
